# EUROPÄISCHE PATENTSCHRIFT

(11) **EP 0 664 017 B1**
(45) Veröffentlichungstag und Bekanntmachung des Hinweises auf die Patenterteilung: **04.03.1998**
(21) Anmeldenummer: 93920824.5
(22) Anmeldetag: 25.09.1993
(51) Int. Cl.: G05B 19/12, F16L 47/02, B29C 65/34

(54) **ELEKTRISCH SCHWEISSBARES, THERMOPLASTISCHES VERBINDUNGSELEMENT**
ELECTRICALLY WELDABLE THERMOPLASTIC JOINING ELEMENT
ELEMENT DE JONCTION THERMOPLASTIQUE SOUDABLE ELECTRIQUEMENT

(30) Priorität: 07.10.1992 CH 3128/92
(43) Veröffentlichungstag der Anmeldung: 26.07.1995
(73) Patentinhaber: WAVIN B.V., NL-8011 CW Zwolle (NL)
(72) Erfinder: AMACHER, Urs, CH-4556 Aeschi (CH); MEIER, Max, CH-4571 Lüterkofen (CH); KUENNECKE, Walter, CH-4102 Binningen (CH)
(74) Vertreter: Feldmann, Clarence Paul
(86) Internationale Anmeldenummer: EP9302610
(87) Internationale Veröffentlichungsnummer: WO9408278

(56) Entgegenhaltungen:
- EP-A- 0 230 642
- EP-A- 0 353 912
- EP-A- 0 462 279
- WO-A-90/13410
- GB-A- 2 137 026
- MACHINES PRODUCTION Nr. 419 , 12. September 1985 , BOULOGNE/SEINE FR Seiten 37 - 39
- PATENT ABSTRACTS OF JAPAN vol. 013, no. 335 (M-856)27. Juli 1989 & JP,A,01 114 419 (HITACHI METALS LTD) 8. Mai 1989
- PATENT ABSTRACTS OF JAPAN vol. 014, no. 091 (M-0938)20. Februar 1990 & JP,A,01 301 231 (HITACHI METALS LTD) 5. Dezember 1989
- VDI ZEITSCHRIFT Bd. 133, Nr. 4 , April 1991 , DUSSELDORF DE Seiten 90 - 96 XP179701 RAINER MARTENS & HEIKO DITTMER 'Zuordnung von Werkzeug und Werkzeugdaten'

## Beschreibung

Die vorliegende Erfindung betrifft ein elektrisch schweissbares Verbindungselement aus thermoplastischem Material zur Verbindung von Rohrleitungsteilen aus thermoplastischem Kunststoff, mit eingebautem Erwärmungsbauteil, sowie einem Informationsträger zur Erkennung des Verbindungselementes und dessen schweisstechnischen Daten.

Rohre aus thermoplastischem Kunststoff werden zum Beispiel als Wasser-, Gas- und Abwasserleitungen verwendet, sowie für den Schutz elektrischer Leitungen und Wärmetransportrohren. Sie werden durch elektrisch schweissbare Verbindungselemente, wie Elektro-Schweissmuffen, Elektroschweiss-Fittings oder Elektro-Anbohrschellen, miteinander verbunden. Nachfolgend werden diese Verbindungselemente stets Elektro-Schweissmuffen genannt. Um die gewünschten Schweissverbindungen herzustellen, müssen die Verbindungselemente eingebaute Heizmittel, wie beispielsweise Heizwendel aus Widerstandsheizdrähten, aufweisen. Wird an diese Heizwendel eine Spannung angelegt, so dass er von Strom durchflossen wird, führt die erzeugte Wärme zur Erhitzung des Materials an den Grenzzonen von Rohr oder Rohrleitungsteil und Muffe. Diese werden so miteinander verschweisst.

Die Schweissenergie, das heisst das Produkt der Schweissparameter (angelegte Spannung, Strom durch die Heizwendel und Zeitdauer des Schweissprozesses), wird über ein Schweissgerät geliefert. Je nach Ausführung dieses Gerätes werden die einzelnen Schweissparameter geregelt.

Um eine einwandfreie Schweissverbindung herzustellen, müssen diese Parameter optimal gewählt und geregelt werden. Sie variieren jedoch mit der Art und Beschaffenheit der Elektro-Schweissmuffe. Hierbei muss die Umgebungstemperatur, beziehungsweise die Temperatur der Schweissmuffe mitberücksichtigt werden.

Bekannte Schweissgeräte, bei denen bei der Wahl der Schweissparameter die Umgebungstemperatur mitberücksichtigt werden, weisen einen im Schweissgerät integrierten Temperaturfühler auf. Dadurch wird aber nur die Umgebungstemperatur, nicht aber die wesentlichere Temperatur der Elektro-Schweissmuffe selber gemessen. Da die Schweissgeräte bei Nichtgebrauch meist in den Werkzeugschuppen gelagert werden, die elektrisch schweissbaren Verbindungselemente aber im Freien, können starke Unterschiede zwischen gemessener Temperatur und effektiver Elektro-Schweissmuffentemperatur auftreten. Dies ist auch der Fall, wenn das Schweissgerät mit dem Temperaturfühler von der Sonne aufgewärmt wird, die Elektro-Schweissmuffe aber im wesentlich kühleren Graben liegt.

Auch unabhängig von der Problematik des Temperaturfaktors ist man bestrebt, Fehler in der Einstellung der Schweissparameter zu vermeiden. Es ist bereits versucht worden, jede Elektro-Schweissmuffe mit spezifischen Erkennungsmerkmalen zu versehen, so dass sie automatisch vom Schweissgerät identifiziert werden kann.

Aus GB-A-2'137'026 ist eine Elektro-Schweissmuffe bekannt, in die ein spezifischer Codewiderstand integriert ist. Das Schweissgerät misst den Widerstandswert und wählt selbsttätig die zur Schweissmuffe gehörenden Schweissparameter. Dieser Code referiert an ein Elektro-Schweissmuffentyp-spezifisches Schweissprogramm, welches im entsprechenden Schweissgerät gespeichert ist. Da nur ein einziger Wert, der Widerstandswert, als gespeicherter Code existiert, können keine weiteren Informationen ans Schweissgerät geliefert werden.

In EP-A-0'189'918 wird eine Elektro-Schweissmuffe mit einem Codebauteil beschrieben, das Oeffnungen in der Form eines Strichcodes aufweist. Eine optische Erkennungseinheit liest den Code und übermittelt dem Schweissgerät die typenspezifischen Informationen. Dieses System verfügt bereits über eine grössere Speicherkapazität an Daten. Aber auch bei diesem System ist der Informationsaustausch einseitig auf die Richtung von Elektro-Schweissmuffe zu Schweissgerät beschränkt.

In EP-A-0'353'912 wird eine Elektro-Schweissmuffe offenbart, die einen passiven Mikro-Chip enthält. Der Chip wird mit einem RF-Signal aktiviert und seine gespeicherten Daten, wie Schweissparameter, Herstellungsdaten usw., abgefragt. Diese Daten werden ans Schweissgerät übermittelt. Die grössere Informationsaufnahme lässt zu, dass neben typenspezifischen Daten weitere Daten, wie Produktionsangaben, abgespeichert werden und über das Schweissgerät abgelesen werden können. Jedoch findet auch hier der Informationsfluss einseitig von Elektro-Schweissmuffe zu Schweissgerät statt.

Es entspricht also dem heutigen Stand der Technik, Elektro-Schweissmuffen vor dem Schweissprozess typenspezifisch eindeutig zu erkennen. Mittels einem Schweissgerät werden beim Schweissprozess die wichtigsten Schweissdaten wie Datum und Zeit der Schweissung, Schweissparameter (Spannung, Strom, Zeitdauer), Umgebungstemeperatur, Art und Durchmesser des Schweisselementes, Schweisser und laufende Nummer im Rohrverlegungsabschnitt getrennt vom Verbindungselement protokolliert. Die Protokolle werden entweder auf Datenbanken (PC) oder auf Magnetkarten gespeichert und somit getrennt von der verschweissten Elektro-Schweissmuffe archiviert. Ist zu einem späteren Zeitpunkt eine Identifikation der Daten mit der entsprechenden Elektro-Schweissmuffe notwendig, so ist die Gefahr gross, dass die Daten der falschen Elektro-Schweissmuffe zugeordnet werden, da die Identifikation jeder einzelnen Elektro-Schweissmuffe nicht absolut gewährleistet ist. Die bekannte Verwendung von beschrifteten oder mit Strichcode versehenen Etiketten löst dieses Problem nicht, weil die Etiketten abfallen, verwittern oder durch sonstige Umwelteinflüsse unlesbar werden können.

Es ist nun Aufgabe der vorliegenden Erfindung, eine eindeutige Zuordnung eines schweissbaren Verbindungselementes zu seinen eigenen Produktions-, Verlege- und Schweissdaten vor und nach dem Schweissprozess zu gewährleisten, wobei diese zum Verbindungselement gehörenden Daten jederzeit abrufbar sein sollen.

Diese Aufgabe löst ein elektrisch schweissbares Verbindungselement aus thermoplastischem Material zur Verbindung von Rohrleitungsteilen aus thermoplastischem Kunststoff, mit eingebautem Erwärmungsbauteil, sowie einem Informationsträger zur Erkennung des Verbindungselementes und dessen schweisstechnischen Daten, das dadurch gekennzeichnet ist, dass der Informationsträger ein aktives oder von aussen aktivierbares, elektronisch bidirektional arbeitendes, im Verbindungselement verbleibendes Modul ist.

Es ist eine weitere Aufgabe der Erfindung, zu gewährleisten, dass die Schweissparameter anhand der effektiven Temperatur des Verbindungselementes gewählt werden.

Diese Aufgabe löst ein elektrisch schweissbares Verbindungselement aus thermoplastischem Material, das dadurch gekennzeichnet ist, dass das Verbindungselement einen Temperaturfühler aufweist.

In den Zeichnungen ist ein Ausführungsbeispiel des Erfindungsgegenstandes dargestellt und in der nachfolgenden Beschreibung erläutert. Es zeigt:
Figur 1 einen Längsschnitt durch eine Elektro-Schweissmuffe
Figur 2 ein schematisches Blockdiagramm, das die wichtigsten, am Informationsaustausch beteiligten Elemente darstellt.

Im folgenden wird stets der Begriff Elektro-Schweissmuffe verwendet. Es ist jedoch offensichtlich, dass sich die Ausführungen auf alle Arten von elektrisch schweissbaren Verbindungselementen, wie Elektro-Schweissmuffen, Elektro-Schweissfittings oder Elektro-Anbohrschellen, beziehen lassen.

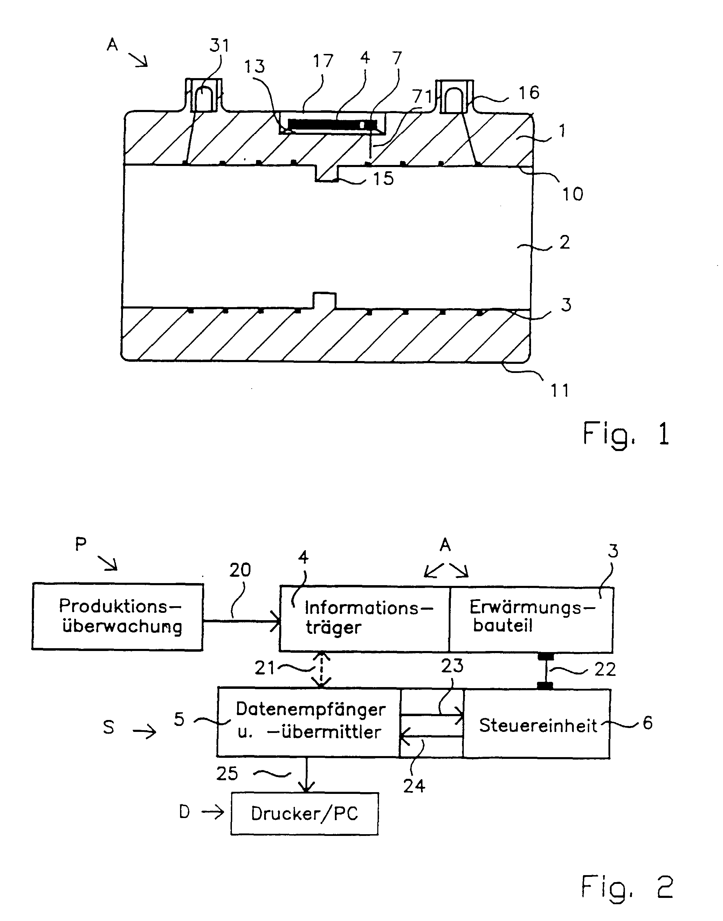

In Figur 1 ist ein Längsschnitt durch eine Elektro-Schweissmuffe A dargestellt. Sie weist einen hülsenförmigen Muffenkörper 1 auf, dessen Oberfläche sich demzufolge in eine Innenwandung 10 und einen äusseren Mantel 11 unterteilen lässt. An seiner Innenwandung 10 weist der Muffenkörper 1 in der Mitte einen Ringwulst oder Nocken auf, der als Anschlag 15 dient. Dieser Anschlag 15 muss jedoch nicht unbedingt vorhanden sein. Die zu verbindenden Rohre oder Rohrleitungsteile, hier nicht eingezeichnet, werden von je einer Seite in den Hohlraum 2 der Elektro-Schweissmuffe hineingeschoben, bis sie am Anschlag 15 anstehen oder bis sie sich in der Mitte des Muffenkörpers 1 berühren. Im Innern des Muffenkörpers 1, nahe bei seiner Innenwandung 10 und somit in der Nähe der zu verschweissenden Rohre oder Rohrleitungsteilen, befindet sich ein Erwärmungsbauteil 3 in der Form eines Heizwendels aus elektrischem Widerstanddraht. Als solches Erwärmungsbauteil 3 muss nicht unbedingt ein Heizwendel gewählt werden, es kommt zum Beispiel auch eine Induktionsspule in Betracht, die einen Wirbelstrom in einem Metallkern induziert. Ferner sind auch elektrisch leitende Kunststoffe oder Lackschichten als Erwärmungsbauteil denkbar.
Der Muffenkörper 1 weist an seinem äusseren Mantel 11, in der Nähe seiner Enden, zwei Anschlussbuchsen 16 auf. In diesen Anschlussbuchsen 16 befinden sich elektrische Kontakte 31. Die elektrischen Kontakte 31 sind mit je einem Ende des Widerstanddrahtes des Heizwendels verbunden. An diesen Kontakten 31 wird das Schweissgerät angeschlossen und die für die Schweissung notwendige Spannung angelegt.

Der Muffenkörper 1 weist zwischen den Anschlussbuchsen 16 eine Aussparung 17 auf, in der sich ein aktiver, beziehungsweise von aussen aktivierbarer, bidirektionaler Informationsträger 4 befindet. In dieser Aussparung 17 ist ein Sockel 13 vorgesehen, auf den der Informationsträger 4 angebracht werden kann. Ebenfalls sind am Sockel 13 Einrastvorrichtungen vorgesehen, so dass der Informationsträger 4 nicht mehr vom Sockel 13 und somit von der Elektro-Schweissmuffe A entfernt werden kann.

Anstelle des Sockels 13 kann der Infromationsträger 4 auch mittels einem Klemmteil, beispielsweise einem Sprengring, in der Aussparung festgehalten werden.
Um den Informationsträger 4 vor Wärme- und Umwelteinflüssen zu schützen, kann er auf übliche Weise gegenüber den übrigen Teilen der Elektro-Schweissmuffe und gegen aussen thermisch isoliert und mechanisch geschützt werden. Der Informationsträger 4 wird im Verlauf des Herstellungsprozesses der Elektro-Schweissmuffe in diese eingebaut und verbleibt dort während der gesamten, späteren Einsatzzeit der Elektro-Schweissmuffe.

Der Informationsträger 4 besteht aus einem Modul, das einen bekannten, handelsüblichen Datenträger beinhaltet, der nach dem Prinzip der bidirektionalen Uebertragung von Daten mit Hilfe von elektrischer oder magnetischer Energie arbeitet. Derartige bidirektionale Module sind vorallem aus Personenerkennungssystemen und Zeiterfassungssystemen bekannt, die in der Sicherheitsüberwachung eingesetzt werden. Es kann hierzu zum Beispiel ein Modul mit einem Speicher-IC, einem EEPROM, verwendet werden. Ebenso kann ein berührungslos schreib- und lesbares Identifikationsmodul des bekannten Typs LEGIC verwendet werden. Es kommen auch andere bekannte, handelsübliche Module in Frage.

Wird die Lösung mit dem Speicher-IC verwendet, so muss eine elektrische Verbindung mit dem Datenempfänger vorhanden sein, die in Figur 1 jedoch nicht eingezeichnet ist. Diese Verbindung kann direkt mit der Schweissstrom-Zuführung der Elektro-Schweissmuffe zusammenfallen oder von dieser getrennt sein. Sind die zwei Stromzuführungen miteinander gekoppelt, so weist das Informationsträgermodul zusätzlich eine übliche Strom- und/oder Spannungsschwellenschaltung auf. Bei einer Trennung der zwei elektrischen Verbindungen weist die Elektro-Schweissmuffe separate elektrische Kontakte für den Stromkreis auf, die hier nicht eingezeichnet sind. Auch in diesem Fall ist die elektrische Verbindung mechanisch mit der Elektro-Schweissmuffen-Stromführung verbunden, so dass es für den Schweisser zwingend ist, dass beide Kontakte hergestellt werden müssen.

Sowohl beim berührungslosen wie auch beim elektrisch verbundenen Informationsträger ist es notwendig, diesen gegenüber Fremdfeldern elektromagnetisch abzuschirmen, um allfällige Fehlfunktionen zu vermeiden. Diese könnten zum Beispiel bei Verwendung eines Erwärmungsbauteils 3 in Form einer Induktionsspule auftreten.

In Figur 2 ist schematisch dargestellt, mit welchen Elementen der Informationsträger 4 Daten austauscht.
Bei der Produktion des Elektro-Schweisselementes, zum Beispiel der Elektro-Schweissmuffe A, wird der Informationsträger 4 in die Elektro-Schweissmuffe A eingebaut. Zu diesem Zeitpunkt wird der Informationsträger 4 mittels einem mit dem Produktionsüberwachungssystem gekoppelten Gerät P beschrieben (20). Die übertragenen Daten können sein: die Identifikationsnummer der Elektro-Schweissmuffe, die Prüfwerte (zum Beispiel Widerstand), alle bei der Schweissung benötigten Soll-Schweissparameter, Herstellungsdatum und Herstellungsort, das verwendete Material, die für die Produktion und Prüfung verantwortliche Person. Diese Daten werden mit einem Schreibschutz versehen, so dass sie nicht mehr gelöscht werden können. Die Daten sind nun fest mit der Elektro-Schweissmuffe A gekoppelt, so dass zu einem späteren Zeitpunkt, zum Beispiel bei der Verlegung der Elektro-Schweissmuffe, eine eindeutige Identifizierung stattfinden kann.

Bei der Verwendung der Elektro-Schweissmuffe A wird durch den Schweisser die elektrische Verbindung 22 zwischen Elektro-Schweissmuffe A und Schweissgerät S hergestellt. Sobald das Schweissgerät eingeschaltet ist, jedoch bevor der Schweissprozess beginnt, wird zwingend auch der Informationsträger 4 aktiviert. Er übermittelt (21) dem Datenempfänger und -übermittler 5 im Schweissgerät S die Sollschweisswerte und je nach Wunsch auch die oben erwähnten Produktionsdaten. Dieser Informationsfluss ist in Figur 2 gestrichelt eingezeichnet, da diese Uebermittlung drahtlos oder über elektrische Verbindung erfolgen kann. Im zweiten Fall kann, wie oben erwähnt, die Leitung 21 mit der elektrischen Verbindung 22 zusammenfallen. Der Datenempfänger und -übermittler 5 übermittelt (23) die Soll-Schweissparameter der Steuereinheit 6 des Schweissgerätes S. Die Schweissung kann nun mit diesen Sollschweissparametern beginnen (22). Je nach Ausführung des Gerätes S werden die eingestellten Spannungs- und Stromwerte oder die Erwärmung der Elektro-Schweissmuffe A überwacht. Nach Abschluss der Schweissung übermittelt (21) der Datenempfänger und -übermittler 5 die von der Steuereinheit 6 gelieferten (24) Ist-Schweissparamter mit verlegungsspezifischen Daten an den Informationsträger 4 in der Elektro-Schweissmuffe A. Verlegungsspezifische Daten können sein: Datum und Uhrzeit, Baustelle und Baustellenabschnitt, Schweisser, Schweissgerätetyp und -nummer, Umgebungstemperatur. Diese Parameter werden im Informationsträger 4 ebenfalls gespeichert. Selbstverständlich können alle sich im Informationsträger 4 befindlichen Daten zusätzlich auf einen PC übertragen und archiviert werden oder auf einem Drucker D ausgedruckt werden, wobei sie auch hier über den Datenempfänger und -übermittler 5 weitergeleitet werden (25).

Im Falle eines zu einem späteren Zeitpunkt auftretenden Schadens am verlegten Rohrsystem können alle elektro-Schweissmuffenspezifischen Daten wieder vom Informationsträger 4 abgerufen werden (21). Auch hier ist wegen der Integration des Informationsträgers 4 in die jeweilige Elektro-Schweissmuffe A eine Verwechslung ausgeschlossen. Die nachträgliche Abrufung der Daten kann auf verschiedene Weisen erfolgen. Entweder erfolgt sie über ein oben beschriebenes Schweissgerät S, das einen Datenempfänger und -übermittler 5 enthält. Es kann auch ein dafür konzipiertes, spezielles Datenerfassungsgerät verwendet werden. Im Fall des berührungslosen Informationsträgers 4 ist die Datenabrufung sogar durch die drahtlose Uebermittlung ohne direkten Zugang zur Elektro-Schweissmuffe A durchführbar.

Dank dem Erfindungsgegenstand ist es nunmehr möglich, jede Elektro-Schweissmuffe unverwechselbar mit allen notwendigen Daten zu versehen, die beim Herstellungsprozess und beim Schweissprozess relevant sind. Die Schweissung lässt sich optimal steuern, eine falsche Wahl der Schweissparameter ist ausgeschlossen. Die erst beim Schweiss- und Verlegungsvorgang entstehenden Daten lassen sich dennoch eindeutig einer Elektro-Schweissmuffe zuordnen. Ebenso ist eine Abrufung der Daten zu jedem gewünschten Zeitpunkt möglich. Zudem sind die Daten dort archiviert, wo sie gebraucht werden, nämlich an der Verlegungsstelle in der Elektro-Schweissmuffe selber.

In einer erweiterten Ausführungsform der Erfindung ist zusätzlich zum bidirektionalen Informationsträger 4 ein Temperaturfühler 7 im Muffenkörper 1 integriert.
In einer Variante der Ausführungsform, die in Figur 1 dargestellt ist, befindet sich der Temperaturfühler 7 als zusätzliches elektrisches Element auf einer Leiterplatte des Moduls des Informationsträgers 4. Da der Informationsträger wärmeisoliert ist, weist der Temperaturfühler 7 einen nicht wärmeisolierten Teil 71 auf, der bis in den Bereich des Erwärmungsbauteils reicht. Dieser Teil 71 besteht beispielsweise aus einem handelsüblichen NTC-Widerstand, mit dessen Hilfe Temperaturveränderungen in analoge elektrische Signale umgewandelt werden. Diese Variante wird nur in der Ausführungsform verwendet, bei der die Datenübertragung zwischen dem Informationsträger 4 und dem Schweissgerät mittels einer elektrischen Verbindung erfolgt.

In einer anderen Variante der Ausführungsform befindet sich der Temperaturfühler gefedert in einer der Anschlussbuchsen 16, so dass durch die Erstellung der elektrischen Verbindung 22 zwischen Elektro-Schweissmuffe A und Schweissgerät S auch der elektrische Kontakt zum Temperaturfühler gewährleistet ist. Auch in dieser Variante reicht der Temperaturfühler in den Muffenkörper 1 hinein. Diese Variante ist sowohl bei drahtloser Datenübertragung von Datenträger 4 zum Schweissgerät S wie auch bei deren Informationsaustausch über elektrische Verbindungen einsetzbar.

Die vom Temperaturfühler gelieferten Daten werden in beiden Varianten entweder direkt analog weiterverarbeitet oder durch einen AD-Wandler in entsprechende digitale Signale umgewandelt.

Dank dem Temperaturfühler 7 lässt sich die effektive Temperatur der Elektro-Schweissmuffe A feststellen, wobei die Temperaturüberwachung vor, während und nach dem Schweissvorgang erfolgen kann.
Sobald der elektrische Kontakt mittels Steckverbindungen zwischen Elektro-Schweissmuffe A und Schweissgerät S hergestellt ist, wird über dem Temperaturfühler die effektive Temperatur des Muffenkörpers 1 über eine bestimmte Zeitspanne gemessen. Vom Temperaturfühler 7 wird die Temperaturinformation als analoges oder digitales Signal direkt zum Schweissgerät S übermittelt. Der übermittelte Temperaturwert bestimmt zusammen mit den vom Informationsträger 4 übermittelten Daten die Soll-Schweissparameter. Diese Art der Temperaturmmessung ermöglicht eine korrektere Bestimmung der Soll-Schweissparameter, da die Temperatur in unmittelbarer Nähe des Erwärmungsbauteils 3 ermittelt wird.

Während dem Schweissprozess kann die Temperatur weiterhin überwacht werden, um einen optimalen Verlauf zu gewährleisten. Uebersteigt die Temperatur ein Maximum oder erhöht sich die Temperatur nicht in dem zu erwartenden Zeitrahmen, so werden die Ist-Schweissparameter, insbesondere Strom und Spannung, angepasst. Sollte die gewünschte Schweisstemperatur nicht erreicht werden, so gibt das Schweissgerät S eine Fehlermeldung. Nach dem Schweissprozess lässt sich die Abkühltemperatur überwachen. Erst wenn die Temperatur unter einen bestimmten Sollwert gesunken ist, gibt das Schweissgerät S das Signal zum Entfernen der Steckverbindungen zwischen Elektro-Schweissmuffe A und Schweissgerät S. Die Abkühltemperatur gibt an, wann sich die Elektro-Schweissmuffe wieder genügend verhärtet hat. Ist der Sollwert unterschritten, so ist die geschweisste Verbindungsstelle stabil genug, damit weitere Anschlussstücke angebaut werden können. Diese letzte Sicherheitsmassnahme gewährleistet ebenfalls die Qualität der Schweissverbindung.

## Patentansprüche

1. Elektrisch schweissbares Verbindungselement aus thermoplastischem Material zur Verbindung von Rohrleitungsteilen aus thermoplastischem Kunststoff, mit eingebautem Erwärmungsbauteil (3), sowie einem Informationsträger (4) zur Erkennung des Verbindungselementes und dessen schweisstechnischen Daten, dadurch gekennzeichnet, dass der Informationsträger (4) ein aktives oder von aussen aktivierbares, elektronisch bidirektional arbeitendes, im Verbindungselement verbleibendes Modul ist.

2. Verbindungselement nach Anspruch 1, dadurch gekennzeichnet, dass das Modul (4) über eine elektrische Leitung (21) in datenübertragender Verbindung bringbar ist.

3. Verbindungselement nach Anspruch 2, dadurch gekennzeichnet, dass die elektrische Leitung (21) lediglich der Datenübertragung dient.

4. Verbindungselement nach Anspruch 2, dadurch gekennzeichnet, dass die elektrische Leitung (21,22) mit dem Erwärmungsbauteil (3) gekoppelt ist.

5. Verbindungselement nach Anspruch 4, dadurch gekennzeichnet, dass im Modul (4) eine Strom- und/oder Spannungsschwellenschaltung integriert ist.

6. Verbindungselement nach Anspruch 1, dadurch gekennzeichnet, dass das Modul (4) kontaktlos induktiv les- und beschreibbar ist.

7. Verbindungselement nach Anspruch 1, dadurch gekennzeichnet, dass der Informationsträger (4) dem Verbindungselement individuell zugehörige, unlöschbare Daten enthält.

8. Verbindungselement nach Anspruch 1, dadurch gekennzeichnet, dass der Informationsträger (4) dem Verbindungselement zugehörige, typenspezifische, unlöschbare Soll-Schweissdaten enthält.

9. Verbindungselement nach Anspruch 1, dadurch gekennzeichnet, dass der Informationsträger (4) aus einem EEPROM-Speicher besteht.

10. Verbindungselement nach Anspruch 9, dadurch gekennzeichnet, dass der EEPROM-Speicher freie, schreib- und lesbare Speicherplätze für Ist-Schweissdaten und/oder verlegungsspezifische Daten enthält.

11. Verbindungselement nach Anspruch 1, dadurch gekennzeichnet, dass das Modul (4) thermisch geschützt im Verbindungselement integral eingeformt ist.

12. Verbindungselement nach Anspruch 1, dadurch gekennzeichnet, dass dieses einen Sockel (13) zur Aufnahme des Moduls aufweist.

13. Verbindungselement nach Anspruch 12, dadurch gekennzeichnet, dass am Sockel (13) Einrastorgane angebracht sind für eine irreversible Verbindung des Moduls (4) mit dem Verbindungselement.

14. Verbindungselement nach Anspruch 1, dadurch gekennzeichnet, dass das Modul (4) auf einer Printplatte angeordnet ist, die in einer Aussparung (17) des Verbindungselementes mittels einem Klemmteil gehalten ist.

15. Verbindungselement nach Anspruch 1, dadurch gekennzeichnet, dass das Modul (4) elektromagnetisch abgeschirmt ist.

16. Verbindungselement nach Anspruch 1, dadurch gekennzeichnet, dass das Verbindungselement einen Temperaturfühler (7) aufweist.

17. Verbindungselement nach Anspruch 16, dadurch gekennzeichnet, dass der Temperaturfühler (7) ein zum Informationsträger (4) zusätzliches Element des Moduls ist.

18. Verbindungselement nach Anspruch 16, dadurch gekennzeichnet, dass der Temperaturfühler (7) bis in den Bereich des Erwärmungsbauteils (3) reicht.

## Claims

1. Electrically weldable joining element made of thermoplastic material for joining pipeline components made of thermoplastic synthetic material, which joining element has an integral heating component (3) and an information carrier (4) for recognizing the joining element and its welding data, characterized in that the information carrier (4) is an active or externally activable module with electronic bidirectional operation which remains in the joining element.

2. Joining element according to Claim 1, characterized in that the module (4) can be connected for data transmission via an electrical line (21).

3. Joining element according to Claim 2, characterized in that the electrical line (21) is used solely for data transmission.

4. Joining element according to Claim 2, characterized in that the electrical line (21, 22) is coupled to the heating component (3).

5. Joining element according to Claim 4, characterized in that a current and/or voltage trigger circuit is integrated in the module (4).

6. Joining element according to Claim 1, characterized in that data can be inductively read out of and written into the module (4) in a contact-free manner.

7. Joining element according to Claim 1, characterized in that the information carrier (4) contains unerasable data individually associated with the joining element.

8. Joining element according to Claim 1, characterized in that the information carrier (4) contains type-specific, unerasable specified welding data associated with the joining element.

9. Joining element according to Claim 1, characterized in that the information carrier (4) comprises an EEPROM memory.

10. Joining element according to Claim 9, characterized in that the EEPROM memory contains free, writable and readable memory locations for actual welding data and/or installation-specific data.

11. Joining element according to Claim 1, characterized in that the module (4) is integrally moulded into the joining element in a thermally protected manner.

12. Joining element according to Claim 1, characterized in that it has a base (13) for receiving the module.

13. Joining element according to Claim 12, characterized in that latching devices are mounted on the base (13) for irreversibly bonding the module (4) to the joining element.

14. Joining element according to Claim 1, characterized in that the module (4) is disposed on a printed circuit board which is held in a recess (17) of the joining element by means of a clamping part.

15. Joining element according to Claim 1, characterized in that the module (4) is electromagnetically screened.

16. Joining element according to Claim 1, characterized in that the joining element has a temperature sensor (7).

17. Joining element according to Claim 16, characterized in that the temperature sensor (7) is an additional element in the module to the information carrier (4).

18. Joining element according to Claim 16, characterized in that the temperature sensor (7) extends into the vicinity of the heating component (3).

## Revendications

1. Elément de liaison à soudage électrique en matériau thermoplastique pour relier des éléments de conduites en thermoplastique, comprenant un élément d'échauffement intégré (3) et un support d'informations (4) destiné à reconnaître l'élément de liaison et ses données concernant la technique de soudage, caractérisé en ce que le support d'informations (4) est un module actif ou apte à être activé de l'extérieur, qui a un fonctionnement électronique bidirectionnel et qui reste dans l'élément de liaison.

2. Elément de liaison selon la revendication 1, caractérisé en ce que le module (4) devient apte à transmettre des données grâce à une ligne électrique (21).

3. Elément de liaison selon la revendication 2, caractérisé en ce que la ligne électrique (21) sert simplement à la transmission de données.

4. Elément de liaison selon la revendication 2, caractérisé en ce que la ligne électrique (21, 22) est couplée avec l'élément d'échauffement (3).

5. Elément de liaison selon la revendication 4, caractérisé en ce qu'un circuit de seuil de courant et/ou de tension est intégré dans le module (4).

6. Elément de liaison selon la revendication 1, caractérisé en ce que le module (4) est apte à être lu et à recevoir des enregistrements par voie inductive sans contact.

7. Elément de liaison selon la revendication 1, caractérisé en ce que le support d'informations (4) contient des données indélébiles associées individuellement à l'élément de liaison.

8. Elément de liaison selon la revendication 1, caractérisé en ce que le support d'informations (4) contient des données de soudage théoriques indélébiles, propres aux modèles et associées à l'élément de liaison.

9. Elément de liaison selon la revendication 1, caractérisé en ce que le support d'informations (4) se compose d'une mémoire EEPROM.

10. Elément de liaison selon la revendication 9, caractérisé en ce que la mémoire EEPROM contient des emplacements de mémoire libres aptes à recevoir des enregistrements et à être lus, pour des données de soudage réelles et/ou des données propres à la pose.

11. Elément de liaison selon la revendication 1, caractérisé en ce que le module (4) est intégré à l'élément de liaison en étant protégé thermiquement.

12. Elément de liaison selon la revendication 1, caractérisé en ce qu'il comporte un socle (13) pour recevoir le module.

13. Elément de liaison selon la revendication 12, caractérisé en ce que des organes d'encliquetage sont prévus sur le socle (13) pour une liaison irréversible entre le module (4) et,l'élément de liaison.

14. Elément de liaison selon la revendication 1, caractérisé en ce que le module (4) est disposé sur une carte imprimée qui est maintenue dans un creux (17) de l'élément de liaison grâce à un élément de serrage.

15. Elément de liaison selon la revendication 1, caractérisé en ce que le module (4) est pourvu d'un blindage électromagnétique.

16. Elément de liaison selon la revendication 1, caractérisé en ce que l'élément de liaison comporte une sonde de température (7).

17. Elément de liaison selon la revendication 16, caractérisé en ce que la sonde de température (7) est un élément du module qui est prévu en plus du support d'informations (4).

18. Elément de liaison selon la revendication 16, caractérisé en ce que la sonde de température (7) va jusque dans la zone de l'élément d'échauffement (3).
